# EUROPEAN PATENT APPLICATION

(11) **EP 4 654 365 A1**
(43) Date of publication of application: **26.11.2025**
(21) Application number: 24854336.5
(22) Date of filing: 24.07.2024
(51) Int. Cl.: H01M 50/383, H01M 50/367, H01M 50/291

(54) **BATTERY PACK AND VEHICLE INCLUDING SAME**

(30) Priority: 16.08.2023 KR 20230107240
(71) Applicant: LG Energy Solution, Ltd., Seoul 07335 (KR)
(72) Inventor: KIM, Kwang-Mo, Daejeon 34122 (KR); LEE, Jung-Hoon, Daejeon 34122 (KR); JUNG, Hye-Mi, Daejeon 34122 (KR)
(74) Representative: Plasseraud IP
(86) International application number: PCT/KR2024/010680
(87) International publication number: WO 2025/037784

(57) **Abstract**

The present disclosure relates to a battery pack including: a plurality of battery cells; a pack case configured to accommodate the plurality of battery cells; and a venting device provided in the pack case and configured to generate forcible convection to discharge venting gas inside the pack case to the outside of the pack case.

## Description

### TECHNICAL FIELD

The present disclosure relates to a battery pack and a vehicle including the same.

This application is based on and claims priority from Korean Patent Application No. 10-2023-0107240, filed on August16, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel in order to increase the charge/discharge capacity. Accordingly, the number of battery cells included in the battery module or pack may be set in various ways depending on the required output voltage or charge/discharge capacity.

Meanwhile, since battery cells undergo chemical reactions during charging and discharging, their performance may deteriorate if they are used at a temperature higher than an appropriate temperature, and if the heat fails to be controlled at the appropriate temperature, unexpected ignition or explosion is more likely to occur. Therefore, if a thermal event such as thermal runaway occurs inside the battery pack, high-temperature gas or flame emitted from the battery cells therein may spread to adjacent battery modules, causing a chain reaction of explosions in the battery modules, which is very dangerous.

Accordingly, in the past, when thermal runaway occurred in the battery pack, high-temperature gas or flame was vented to the outside of the battery pack due to the pressure difference between the inside and outside of the battery pack. However, in this case, the gas or flame may not be quickly vented to the outside of the battery pack, and when thermal runaway of the battery module ends, the pressure difference between the inside and outside of the battery pack is reduced, which causes a problem in which the gas or flame is unable to be continuously vented. As a result, even after thermal runaway of the battery module ends, high-temperature heat may remain inside the battery pack so that the heat is likely to transfer to adjacent battery modules.

Therefore, it is necessary to develop a structure capable of, when thermal runaway occurs in the battery module, quickly discharging high-temperature gas or flame generated inside the battery module to the outside of the battery pack to minimize thermal propagation to adjacent battery modules.

In addition, there is a need to develop a structure capable of continuously discharging high-temperature gas or flame to the outside of the battery pack even after thermal runaway of the battery module ends, thereby preventing thermal accumulation inside the battery pack.

### DISCLOSURE

### Technical Problem

The present disclosure is designed to solve the problems of the related art, and therefore the present disclosure is directed to providing a battery pack capable of quickly discharging gas or flame generated inside the battery module, when thermal runaway occurs in the battery module, to the outside of the battery pack to effectively prevent or delay thermal propagation between the battery modules.

In addition, the present disclosure is also to provide a battery pack capable of continuously discharging high-temperature gas or flame to the outside of the battery pack even after thermal runaway of the battery module ends, thereby preventing thermal accumulation inside the battery pack to provide improved safety and reliability.

In addition, the present disclosure is also to provide a vehicle that includes the battery pack described above.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; a pack case configured to accommodate the plurality of battery cells; and a venting device provided in the pack case and configured to generate forcible convection to discharge venting gas inside the pack case to the outside of the pack case.

The battery pack according to an embodiment of the present disclosure may further include a module case configured to group at least some of the plurality of battery cells and have a venting hole formed on at least one surface thereof.

The pack case may include a pack frame provided to surround the plurality of battery cells and having the venting device, and a venting path through which the venting gas flows may be formed inside the pack frame, and the venting device may be configured to forcibly discharge the venting gas inside the venting path to the outside of the pack case.

The pack frame may include a base frame configured to have the battery cell seated thereon, and a plurality of side frames extending upward from the base frame, and the venting path may be formed inside the plurality of side frames.

A plurality of venting device may be provided on side frames facing each other, among the plurality of side frames.

The pack frame may include a cross-beam configured to connect side frames facing each other, among the plurality of side frames, and the venting path may be formed inside the cross-beam.

The plurality of venting devices may be arranged symmetrically with respect to the cross-beam.

At least one inlet configured such that the venting gas flows into the venting path may be formed in the pack frame.

A plurality of inlets may be provided to be spaced apart from each other along a direction in which the pack frame extends.

The inlet may be formed in an oblong shape in a direction in which the pack frame extends.

The battery pack according to an embodiment of the present disclosure may further include a rib provided inside the venting path formed in the pack frame and configured to guide the venting gas toward the venting device.

A plurality of inlets may be arranged in a plurality of rows, and the rib may be provided between two adjacent rows.

The rib may be configured to extend in a straight line along a direction in which the pack frame extends.

The venting path may be divided into a plurality of partitioned spaces by the ribs, and the venting device may be configured to communicate with the plurality of partitioned spaces, respectively.

The pack case may include a pack lid coupled to a top of the pack frame and configured to be spaced apart from the battery cell, and the venting gas may be configured to flow in a space between the battery cell and the pack lid.

The venting device may include a fan assembly.

The fan assembly may include a coupling portion configured to be coupled to the pack frame, and a plurality of rotating portions extending outward from the coupling portion and configured to be rotatable.

In addition, the present disclosure provides a vehicle including a battery pack according to the present disclosure.

### Advantageous Effects

According to one aspect of the present disclosure, it is possible to quickly discharge gas or flame generated inside the battery module, when thermal runaway occurs in the battery module, to the outside of the battery pack. Thus, thermal propagation between battery modules may be effectively prevented or delayed to provide safety and reliability of the battery pack.

In addition, according to another aspect of the present disclosure, high-temperature gas or flame can be continuously discharged to the outside of the battery pack even after thermal runaway of the battery module ends, thereby preventing thermal accumulation inside the battery pack.

In addition, according to another aspect of the present disclosure, it is possible to prevent or delay events such as fire or explosion due to thermal runaway of a device equipped with a battery pack.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery pack according to an embodiment of the present disclosure.
FIG. 2 is an exploded perspective view of a battery pack according to an embodiment of the present disclosure.
FIG. 3 is an enlarged view of part A in FIG. 2, which illustrates the structure of a venting device of a battery pack according to an embodiment of the present disclosure.
FIG. 4 is a cross-sectional view of a venting device of a battery pack according to an embodiment of the present disclosure.
FIG. 5 is a cross-sectional view taken along line I-I' in FIG. 1, which illustrates a venting path of a battery pack according to an embodiment of the present disclosure.
FIG. 6 is an enlarged view of part B in FIG. 5.
FIG. 7 is an enlarged view of part C in FIG. 5.
FIG. 8 is a drawing illustrating an inlet of a battery pack according to an embodiment of the present disclosure.
FIG. 9 is a drawing illustrating an inlet of a battery pack according to another embodiment of the present disclosure.
FIG. 10 is a cross-sectional perspective view of a venting path of a battery pack according to an embodiment of the present disclosure.
FIG. 11 is a cross-sectional view taken along line II-II' in FIG. 1.
FIG. 12 is a cross-sectional view taken along line III-III' in FIG. 1.
FIG. 13 is a cross-sectional view taken along line IV-IV' in FIG. 1, which illustrates a venting path of a battery pack according to another embodiment of the present disclosure.
FIG. 14 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure includes various embodiments. Redundant descriptions of elements that are substantially identical or similar to each other between the embodiments will be omitted, and the description will be made based on differences thereof.

Meanwhile, although terms indicating directions such as upward, downward, left, right, front, and back are used in this specification, it is obvious to those skilled in the art that these terms are only for convenience of explanation and may vary depending on the location of the target object or the location of the observer.

For example, in the embodiment of the present disclosure, the X-axis direction shown in the drawing may indicate the front-back direction, the Y-axis direction may indicate the left-right direction perpendicular to the X-axis direction on the horizontal plane (X-Y plane), and the Z-axis direction may indicate the upward-downward direction (vertical direction) perpendicular to both the X-axis direction and the Y-axis direction.

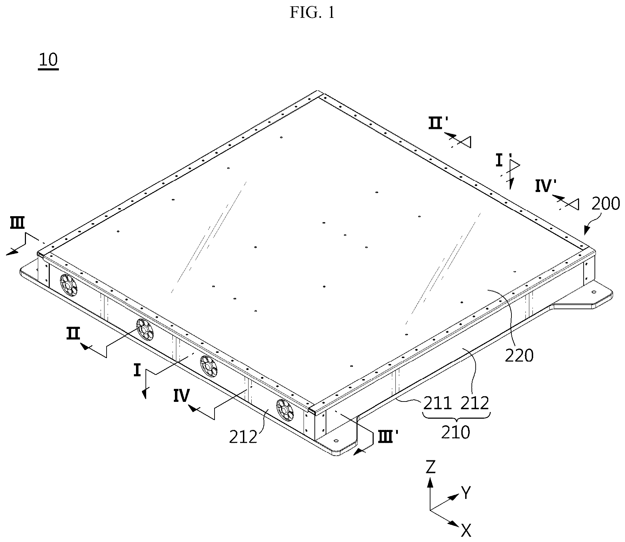

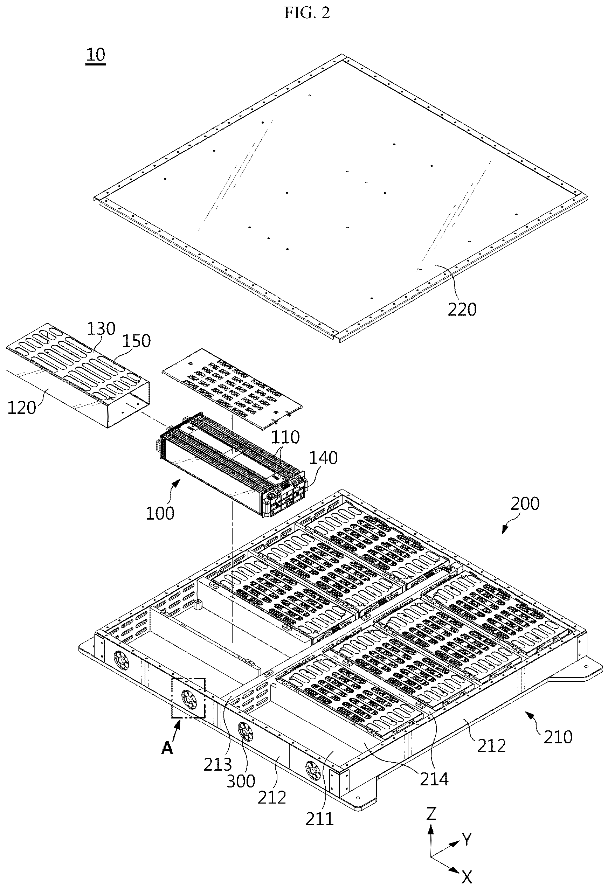

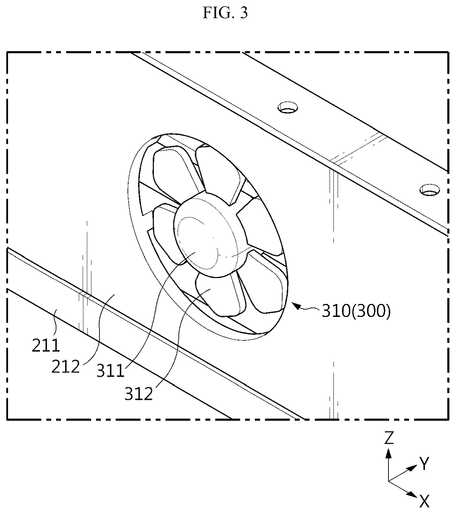

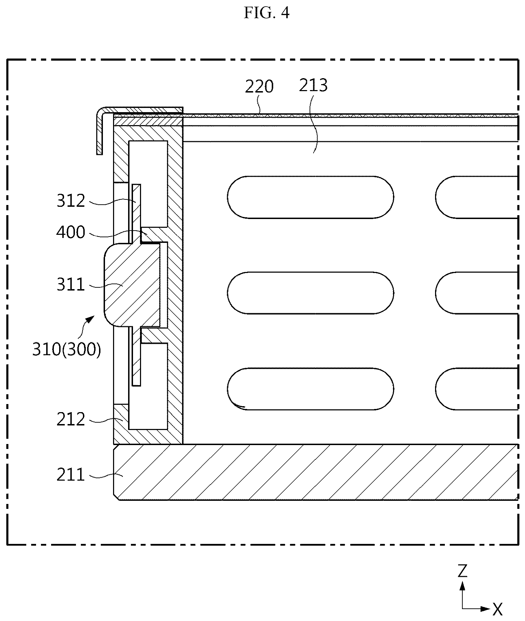

FIG. 1 is a perspective view of a battery pack according to an embodiment of the present disclosure, and FIG. 2 is an exploded perspective view of a battery pack according to an embodiment of the present disclosure. In addition, FIG. 3 is an enlarged view of part A in FIG. 2, which illustrates the structure of a venting device of a battery pack according to an embodiment of the present disclosure, and FIG. 4 is a cross-sectional view of a venting device of a battery pack according to an embodiment of the present disclosure.

Referring to FIGS. 1 to 4, a battery pack 10 according to an embodiment of the present disclosure may include a battery cell 110, a pack case 200, and a venting device 300.

First, referring to FIG. 1, the battery pack 10 according to the present disclosure may include a pack case 200. The pack case 200 forms the exterior of the battery pack 10. The pack case 200 may have predetermined lengths in the X-axis, Y-axis, and Z-axis directions, and may have an overall shape of approximately a cuboid. The pack case 200 may include a pack frame 210 in the form of a box having an upper opening and a pack lid 220 that covers the upper opening of the pack frame 210.

Referring further to FIG. 2, the battery pack 10 according to the present disclosure may include at least one battery cell, preferably a plurality of battery cells 110. The battery cells 110 may be accommodated in the pack case 200 in FIG. 1. In this case, multiple battery cells 110 may be electrically connected to each other.

The battery cell 110 may be provided in a pouch-type. A cell case of the pouch-type battery cell 110 may be configured in a pouch in which an aluminum metal layer is interposed between polymer layers.

In addition, although not shown in the drawing, the pouch-type battery cell 110 may include an electrode assembly, a cell case that accommodates the electrode assembly, and an electrode lead that is connected to the electrode assembly and extends to the outside of the cell case to function as an electrode terminal. The cell case may include a storage portion that accommodates the electrode assembly and a sealing portion that seals the periphery of the storage portion.

In this case, the plurality of battery cells 110 may be arranged side by side in the left-right direction (Y-axis direction) while standing in the vertical direction (Z-axis direction), as shown in FIG. 2. In this case, each battery cell 110 may have sealing portions directed in the front-back direction (X-axis direction) and the upward-downward direction (Z-axis direction), and a storage portion directed in the left-right direction (Y-axis direction).

Meanwhile, the present disclosure is not limited to a specific type or shape of the battery cell 110, and various battery cells 110 known at the time of filing the present disclosure may be applied to configure the battery pack 10 of the present disclosure. Although the pouch-type secondary battery, as shown in the drawing, with high energy density and easy to stack will be described in the present embodiment, it is obvious that a cylindrical or prismatic secondary battery can be applied as the battery cell 110.

Meanwhile, the pack case 200 may be configured to accommodate a plurality of battery cells 110. That is, the pack case 200 may provide an accommodation space so as to accommodate a plurality of battery cells 110. The pack case 200 may be made of a material capable of securing mechanical strength, for example, metal such as SUS or fiber-reinforced plastic, or may include such a material in order to safely protect the battery cells 110 accommodated therein.

The pack frame 210 may be provided to surround the plurality of battery cells 110. Specifically, the pack frame 210 may include a base frame 211 and a plurality of side frames 212.

The base frame 211 may be configured to have the plurality of battery cells 110 seated thereon. The base frame 211 may form the lower surface of the pack case 200 and may be configured in a square plate. In addition, the base frame 211 may have a flat upper surface so that a module case 120 may be stably seated thereon.

The plurality of side frames 212 may be provided to extend upward from respective edges of the base frame 211. The plurality of side frames 212 may be provided to surround the plurality of battery cells 110. More specifically, the multiple side frames 212 may include a right wall located at the end of the base frame 211 in the +Y-axis direction, a rear wall located at the end thereof in the +X-axis direction, a left wall located at the end thereof in the -Y-axis direction, and a front wall located at the end thereof in the -X-axis direction, thereby constituting the side surfaces of the pack case 200.

Meanwhile, the plurality of battery cells 110 may be disposed adjacent to each other in the front-back direction and/or left-right direction along a plurality of rows. For example, as shown in FIG. 2, the plurality of battery cells 110 may be arranged in two rows in the front-back direction (X-axis direction) and in four rows in the left-right direction (Y-axis direction).

In addition, referring to FIG. 2, the pack frame 210 may include a cross-beam 213. The cross-beam 213 may be configured to connect the side frames 212 facing each other, among the plurality of side frames 212. For example, as shown in FIG. 2, the cross-beam 213 may be provided to extend in the left-right direction and connect the right wall and the left wall of the side frames 212.

In this case, the cross-beam 213 may be configured to partition the plurality of battery cells 110. The cross-beam 213 may be provided between the battery cells 110 that are arranged in two rows in the front-back direction. Accordingly, the plurality of battery cells 110 may be provided to be spaced apart by the cross-beam 213.

In addition, the pack frame 210 may include a partition 214. A plurality of partitions 214 may be provided to connect the side frames 212 and the cross-beam 213. For example, as shown in FIG. 2, the partitions 214 may be provided to connect the front and rear walls of the side frames 212 and the cross-beam 213, respectively. In this case, the plurality of partitions 214 may be provided spaced apart from each other in a direction in which the cross-beam 213 extends, i.e., the left-right direction. The partitions 214 may be provided between the plurality of battery cells 110 arranged in four rows along the left-right direction, thereby partitioning the battery cells 110.

Meanwhile, the pack lid 220 may be coupled to the top of the side frame 212 to form the upper surface of the pack case 200. In this case, the pack lid 220 may be provided to be spaced a predetermined distance apart from the top of the cross-beam 213 and the battery cells 110 in the vertical direction (Z-axis direction).

In addition, the battery pack 10 according to an embodiment of the present disclosure may include a venting device 300. The venting device 300 may be provided in the pack case 200. Specifically, the venting device 300 may be provided on the side surface of the pack case 200, that is, on the side frames 212. The venting device 300 may be configured to discharge gas generated from the battery cell 110 stored inside the pack case 200 to the outside of the pack case 200. In this case, the venting device 300 may be configured to generate forcible convection. Here, the forcible convection indicates, unlike the phenomenon in which gas or the like moves from a place of high pressure to a place of low pressure due to a pressure difference, that gas is artificially moved even if there is no pressure difference. It is preferable that the venting device 300 is configured to communicate with the outside of the pack case 200.

According to the above-implemented configuration of the present disclosure, when thermal runaway occurs in the battery cell 110, gas or flame generated inside the battery cell 110 may be quickly discharged to the outside of the battery pack 10. In addition, when thermal runaway of the battery cell 110 ends, the pressure difference between the inside and outside of the battery pack 10 decreases, so that the movement of the venting gas or the like stops. However, according to the above-implemented configuration of the present disclosure, the heat remaining in the adjacent battery cell 110, as well as high-temperature gas or flame, may be forcibly discharged to the outside of the battery pack 10 by the forcible convection of the venting device 300, thereby preventing thermal accumulation inside the battery pack 10. As a result, thermal runaway propagation between the battery cells 110 may be effectively prevented or delayed, thereby ensuring the safety and reliability of the battery pack 10.

Meanwhile, a plurality of venting devices 300 may be provided. The venting device 300 may be provided in at least one of the plurality of side frames 212. The venting devices 300 may be provided in each of two or more side frames 212, or two or more venting devices 300 may be provided in one side frame 212.

The venting devices 300 may be provided in the side frames 212 facing each other, among the plurality of side frames 212. For example, referring to FIG. 2, a plurality of venting devices 300 may be respectively provided on the left and right walls of the plurality of side frames 212. In this case, the plurality of venting devices 300 may be provided symmetrically with respect to the cross-beam 213. As the venting devices 300 are provided on both sides of the pack frame 210 as in the above-implemented configuration of the present disclosure, when the battery cell 110 is in an abnormal state, high-temperature gas or the like may be discharged in both directions of the pack case 200, thereby facilitating quick discharge of the gas to the outside of the pack case 200.

Meanwhile, the number of installations or positions of the venting devices 300 described in the embodiment in FIG. 2 or the like are only examples, and may vary to other numbers or locations.

Referring to FIG. 3 and FIG. 4, specifically describing the structure of the venting device 300, the venting device 300 may include a fan assembly 310. The fan assembly 310 may include a coupling portion 311 coupled to the pack frame 210 and a plurality of rotating portions 312 configured to extend outward from the coupling portion 311 and be rotatable. The plurality of rotating portions 312 may be provided radially spaced apart from each other, based on the coupling portion 311. According to the above-implemented configuration of the present disclosure, since the rotation of the rotating portions 312 forces gas to move and heat to circulate, the heat inside the pack case 200 may be discharged to the outside of the pack case 200. In addition, any structure may be applied to the venting device 300 as long as it is able to generate forcible convection.

The side frame 212 may have a coupling hole configured such that the fan assembly 310 may be coupled thereto, and the fan assembly 310 may be inserted into and installed in the coupling hole.

Meanwhile, the battery pack 10 according to an embodiment of the present disclosure may further include a module case 120. The module case 120 may be configured to have an inner space formed therein, so that at least some of the plurality of battery cells 110 may be accommodated in the inner space. In particular, the module case 120 may be a boundary that groups the plurality of battery cells 110 into several battery cells 110 and physically confines the inner space of each battery cell 110.

That is, the battery pack 10 according to the present disclosure may include a plurality of battery modules 100, and the plurality of battery cells 110 included in the battery pack 10 may be divided and accommodated in the plurality of battery modules 100.

The module case 120 may be made of a metal material having rigidity and heat resistance in order to physically or chemically protect the accommodated battery cells 110.

Meanwhile, referring to FIG. 2, the module case 120 may be provided as a mono frame. For example, the module case 120 may be configured as a square tube having an upper surface, a lower surface, a left surface, and a right surface, and having front and back openings.

Alternatively, the module case 120 may be provided as a U-frame. The U-frame-type module case 120 may be configured to cover both side surfaces and the lower surface of the battery cell 110. The module case 120 may include left and right plates covering both side surfaces of the battery cell 110, and a lower plate covering the lower surface of the battery cell 110. In addition, the left plate, the right plate, and the lower plate may be configured in an integrated form. In this case, the module case 120 may have an upper opening and front and back openings.

In addition, the module case 120 may be configured in various other forms. For example, the module case 120 may include a box-type lower case having an upper opening, and an upper cover that closes the upper opening of the lower case. In this case, the lower case may be provided such that the left and right plates covering both side surfaces of the battery cell 110 and the front and rear plates covering the front and rear surfaces of the battery cell 110 are integrally formed.

The battery module 100 may include a top plate 130 constituting the upper surface of the module case 120. Alternatively, in the case where the module case 120 is configured as a U-frame, the top plate 130 may be coupled to the upper opening of the module case 120. In this case, the coupling of the top plate 130 and the module case 120 may result in a square tube having front and back openings.

In addition, the battery module 100 may include an end plate 140 provided on the front and back openings of the module case 120. The end plate 140 may be welded to the module case 120. Meanwhile, although not shown in the drawings for convenience, the end plate 140 may be configured, for example, such that the inner side thereof is made of an insulating material and outer side is made of a metal material. In addition, the end plate 140 may be partially provided with a hole or slit for exposing components that need to be exposed to the outside, such as a positive electrode terminal and a negative electrode terminal of the battery cell 110 or a connector.

In addition, although not shown in the drawing, the battery module 100 may include a bus-bar assembly and/or a module terminal that is electrically connected to the plurality of battery cells 110 accommodated inside the module case 120.

Meanwhile, at least one venting hole 150 may be formed in the module case 120. Preferably, a plurality of venting holes 150 may be formed. The venting holes 150 may be configured to discharge venting gas generated from the battery cell 110 to the outside of the module case 120. The venting holes 150 may be formed on one side of the module case 120, so that directional venting in one direction may be possible. For example, the venting holes 150 may be formed on the upper surface of the module case 120. In the example shown in FIG. 2, the venting holes 150 may be formed on the top plate 130. According to the above-described implemented configuration of the present disclosure, the remaining portion of the module case 120, excluding the venting holes, 150 is sealed, so that gas or flame may be discharged in a straight line toward the venting holes 150.

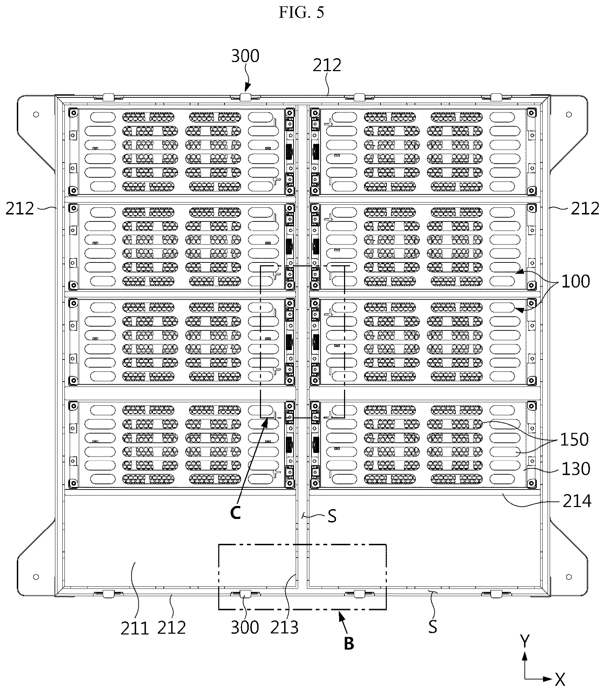

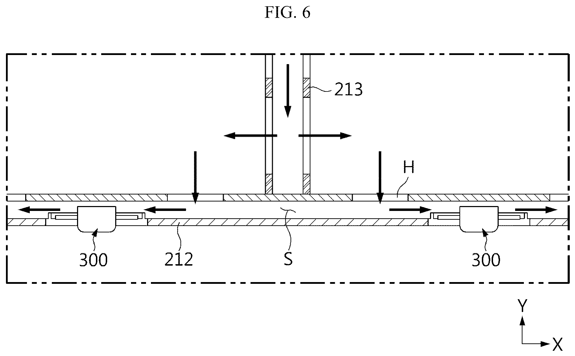

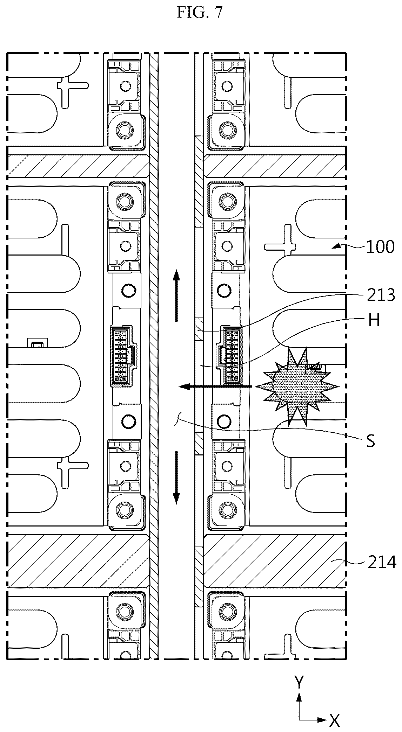

FIG. 5 is a cross-sectional view taken along line I-I' in FIG. 1, which illustrates a venting path of a battery pack according to an embodiment of the present disclosure. In addition, FIG. 6 is an enlarged view of part B in FIG. 5, and FIG. 7 is an enlarged view of part C in FIG. 5.

Meanwhile, the venting device 300 may be provided to be in communication with a venting path S. The venting path S may indicate a passage through which venting gas or the like flows. The venting device 300 may be configured to forcibly discharge the venting gas inside the venting path S to the outside of the pack case 200. That is, the venting gas or the like discharged from the battery cell 110 or battery module 100 may move to the venting path S and then be discharged to the outside of the pack case 200 from the venting path S by the venting device 300. As a result, the venting gas or the like may be prevented from staying in the venting path S and accumulating heat.

Referring to FIGS. 5 to 7, the venting path S may be formed inside the pack frame 210. That is, an empty space may be formed inside the pack frame 210 so that the venting gas or the like may flow therethrough, and the space may be defined as the venting path S.

In this case, as shown in FIG. 6 and FIG. 7, the pack frame 210 may include at least one inlet H. The inlet H may be configured so that the venting gas flows into the venting path S formed inside the pack frame 210. The inlet H may be configured to communicate with the venting device 300. A plurality of inlets H may be provided. As a result, the venting gas or the like generated inside the battery module 100 may flow into the venting path S through the inlet H to be discharged to the outside of the pack case 200 by the venting device 300.

Specifically, as shown in FIG. 6, the venting path S may be formed inside the plurality of side frames 212. In addition, the inlet H may be formed on the inner surfaces of the plurality of side frames 212. Accordingly, as shown in the arrow in FIG. 6, the venting gas or the like generated inside the battery module 100 may move to the venting path S formed in the side frame 212 through the inlet H and then be discharged to the outside of the pack case 200 by the venting device 300.

According to the above-implemented configuration of the present disclosure, the venting gas or the like may move directly to the inner space of the side frames 212 where the venting device 300 is provided, so that the venting gas or the like may be quickly discharged to the outside of the pack case 200.

In addition, as shown in FIG. 7, the venting path S may be formed inside the cross-beam 213. In this case, the cross-beam 213 may be configured to directly or indirectly communicate with the side frame 212. In addition, the inlet H may be formed on the surface of the cross-beam 213 facing the battery module 100.

Accordingly, as indicated by the arrow in FIG. 7, the venting gas generated inside the battery module 100 may move to the venting path S through the inlet H formed on the cross-beam 213 and then move to the venting path S of the side frame 212 equipped with the venting device 300. Accordingly, the gas may be discharged to the outside of the pack case 200 by the venting device 300 provided in the side frame 212.

Therefore, according to the above-implemented configuration of the present disclosure, since the venting gas or the like emitted from all battery modules 100 in contact with the cross-beam 213 may move directly to the venting path S formed in the cross-beam 213, the venting gas or the like may be discharged more quickly to the outside of the pack case 200.

Meanwhile, referring to FIG. 7, if the inlets H are formed on the surface of the cross-beam 213 facing the battery module 100, the inlets H formed on the surface may be arranged so as not to overlap each other. That is, the inlets H formed on the left surface of the cross-beam 213 and the inlets H formed on the right surface of the cross-beam 213 may be disposed staggered so as not to overlap each other.

According to the above-implemented configuration of the present disclosure, it is possible to prevent venting gas or the like flowing into the venting path S through an inlet H due to a thermal event occurring in a battery module 100 from being discharged to another battery module 100 through another inlet H formed on the side of another battery module 100 facing the battery module 100. Therefore, thermal runaway propagation to adjacent battery modules 100 may be effectively prevented or delayed.

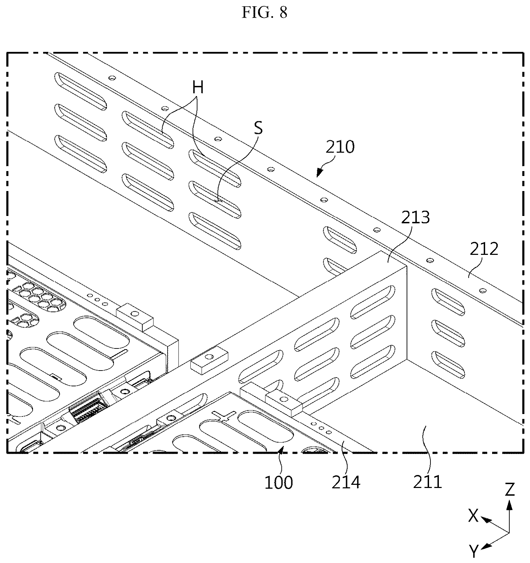

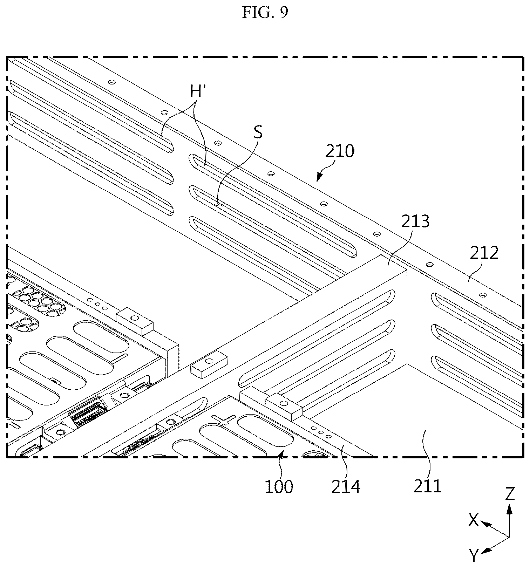

FIG. 8 is a drawing illustrating an inlet of a battery pack according to an embodiment of the present disclosure, and FIG. 9 is a drawing illustrating an inlet of a battery pack according to another embodiment of the present disclosure.

Referring to FIG. 8 and FIG. 9, a plurality of inlets H and H' may be provided to be spaced apart from each other in the direction in which the pack frame 210 extends. For example, as in the embodiment shown in FIG. 8, the inlets H and H' may be arranged in the horizontal direction and vertical direction. That is, one battery module 100 may be provided to be in contact with the plurality of inlets H and H' formed in the cross-beam 213. According to the above-described implemented configuration of the present disclosure, since the plurality of inlets H and H' are provided, a larger amount of venting gas or the like may be introduced into the venting path S.

Meanwhile, as shown in FIG. 9, the plurality of inlets H arranged in the horizontal direction in the above-described embodiment may be integrated to form an inlet H'. In this case, an oblong inlet H' may be provided in the direction in which the pack frame 210 extends. According to the above-implemented configuration of the present disclosure, a larger amount of gas may flow into the venting path S of the pack frame 210 than when the inlet H' is provided as a small-diameter circular hole, so that gas or heat inside the pack case 200 may be discharged more quickly to the outside of the battery pack 10.

The widthwise length of the inlet H or H' formed in the cross-beam 213 may be configured to be smaller than the length of the battery module 100 in the left-right direction. According to the above-implemented configuration of the present disclosure, gas generated in a battery module 100 moves only through the inlet H or H' communicating with the battery module 100, so that the gas is more unlikely to spread to another battery module 100.

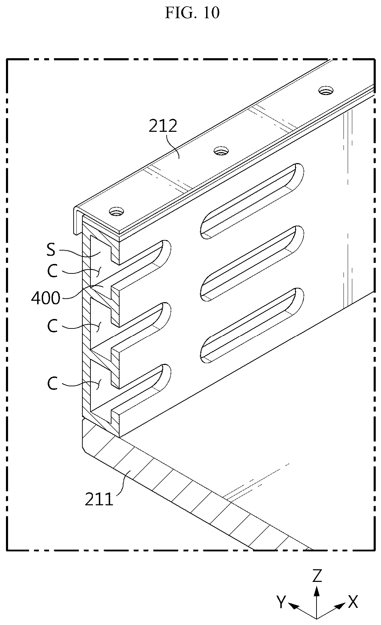

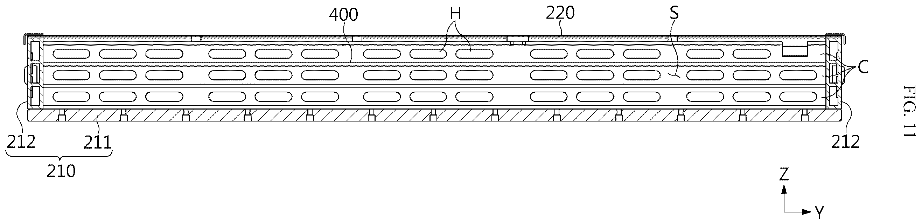

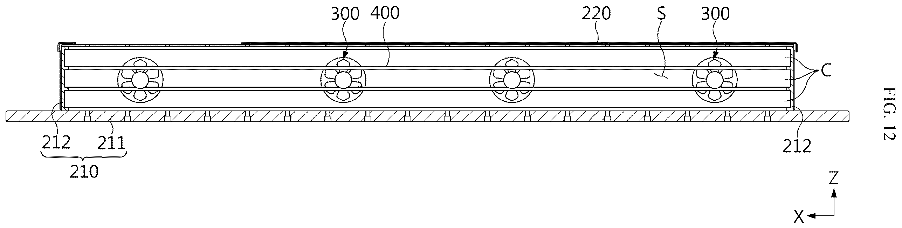

FIG. 10 is a cross-sectional perspective view of a venting path of a battery pack according to an embodiment of the present disclosure. FIG. 11 is a cross-sectional view taken along line II-II' in FIG. 1, and FIG. 12 is a cross-sectional view taken along line III-III' in FIG. 1.

Referring to FIGS. 10 to 12, the battery pack 10 according to an embodiment of the present disclosure may further include a rib 400. The rib 400 may be provided inside the venting path S formed in the pack frame 210 so as to guide venting gas to the venting device 300. That is, the rib 400 provided in the cross-beam 213 may be configured to guide venting gas or the like to the side frames 212 connected to both sides of the cross-beam 213. In addition, the rib 400 provided in the side frame 212 may be configured to guide venting gas or the like to the venting device 300.

As described above, a plurality of inlets H may be provided in a plurality of rows. In this case, the rib 400 may be provided between two adjacent rows among the plurality of rows. For example, as shown in FIG. 11, the inlets H may be arranged in three rows in the vertical direction, and two ribs 400 may be provided between two adjacent rows so as to be spaced apart from each other in the vertical direction.

Referring to FIG. 11 and FIG. 12, the rib 400 may be provided to extend in a straight line along the direction in which the pack frame 210 extends. The horizontal length of the rib 400 may be configured to correspond to the horizontal length of the pack frame 210. Accordingly, the venting path S may be divided into a plurality of partitioned spaces C by the ribs 400. For example, as in the embodiment shown in FIGS. 11 and 12, the venting path S may be partitioned into three partitioned spaces C by two ribs 400. In this case, the inlet H may be provided in each partitioned space C. Therefore, according to the above-described implemented configuration of the present disclosure, the venting gas may be quickly introduced into any one partitioned space C through the inlet H, regardless of the height at which the venting gas is discharged from the battery module 100.

In addition, the venting device 300 may be configured to communicate with the plurality of partitioned spaces C, respectively. Accordingly, the venting gas or the like emitted from a battery module 100 may flow into at least one partitioned space C of the venting path S formed in the cross-beam 213 or the side frame 212, and may be guided toward the venting device 300 along the rib 400 and discharged to the outside of the pack case 200 by the forcible convection of the venting device 300.

Meanwhile, referring back to FIG. 4, in the case where the venting device 300 includes the fan assembly 310, the coupling portion 311 of the fan assembly 310 may be coupled between two adjacent ribs 400. That is, the vertical height of the coupling portion 311 may be configured to correspond to the gap between two adjacent ribs 400.

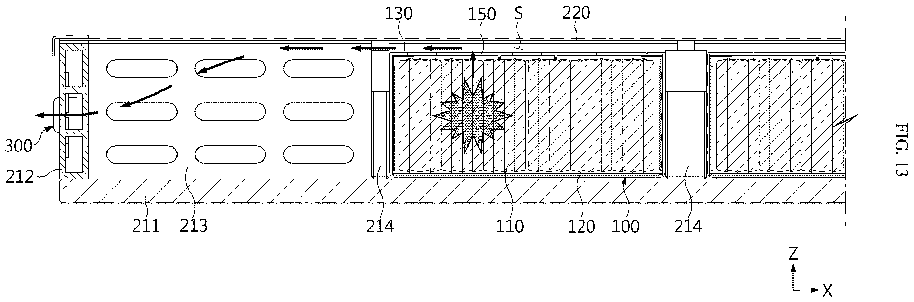

FIG. 13 is a cross-sectional view taken along line IV-IV' in FIG. 1, which illustrates a venting path of a battery pack according to another embodiment of the present disclosure.

Referring to FIG. 13, the venting gas may be configured to flow in the space between the battery module 100 and the pack lid 220. That is, a venting path S may be formed in the space between the battery module 100 and the pack lid 220. In addition, a space may exist between the pack lid 220 and the cross-beam 213 and between the pack lid 220 and the partition 214, thereby forming a venting path S. As a result, the venting gas or the like discharged upward through the venting holes 150 of the battery module 100 may move to the venting path S and may be discharged to the outside of the pack case 200 by the venting device 300 provided in the side frame 212.

According to the above-implemented configuration of the present disclosure, since various venting paths S are provided inside the pack case 200, when the battery cell 110 is in an abnormal state, the venting gas generated from the battery cell 110 may be efficiently guided to the venting device 300 so as to be discharged more quickly to the outside of the pack case 200.

The effective discharge of the venting gas and heat to the outside of the battery pack 10 may be maximized by a combination of the venting path S formed inside the pack frame 210 described in the previous embodiments and the venting path S formed in the space between the battery module 100 and the pack lid 220 described in this embodiment.

Forcible convection generated by the venting device 300 in the venting path S may enable the venting gas and heat to be discharged quickly and continuously when thermal runaway occurs in the battery module 100, regardless of the pressure difference inside and outside the battery pack 10.

According to this implemented configuration, heat transfer between battery modules 100 may be minimized in the battery pack 10, thereby suppressing thermal propagation between the battery modules 100 inside the battery pack 10, so that the safety requirements related to thermal propagation, which require no flame exposure outside the battery pack 10, may be met.

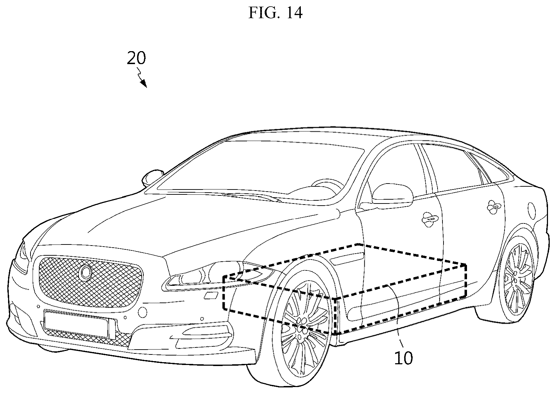

FIG. 14 is a schematically perspective view of a vehicle including a battery pack according to an embodiment of the present disclosure.

Referring to FIG. 14, a vehicle 20 according to an embodiment of the present disclosure may include one or more battery packs 10 according to an embodiment of the present disclosure or one or more battery modules 100 according to an embodiment of the present disclosure. The vehicle 20 according to the present disclosure may be, for example, an electric vehicle, a hybrid vehicle, or a plug-in hybrid vehicle. The vehicle 20 includes a four-wheel vehicle and a two-wheel vehicle. The above vehicle 20 drives by receiving power from the battery pack 10 or battery module 100 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a plurality of battery cells;
a pack case configured to accommodate the plurality of battery cells; and
a venting device provided in the pack case and configured to generate forcible convection to discharge venting gas inside the pack case to the outside of the pack case.

2. The battery pack according to claim 1,
further comprising a module case configured to group at least some of the plurality of battery cells and have a venting hole formed on at least one surface thereof.

3. The battery pack according to claim 1,
wherein the pack case comprises a pack frame provided to surround the plurality of battery cells and having the venting device,
wherein a venting path through which the venting gas flows is formed inside the pack frame, and
wherein the venting device is configured to forcibly discharge the venting gas inside the venting path to the outside of the pack case.

4. The battery pack according to claim 3,
wherein the pack frame comprises a base frame configured to have the battery cell seated thereon, and
a plurality of side frames extending upward from the base frame, and
wherein the venting path is formed inside the plurality of side frames.

5. The battery pack according to claim 4,
wherein a plurality of venting device are provided on side frames facing each other, among the plurality of side frames.

6. The battery pack according to claim 4,
wherein the pack frame comprises a cross-beam configured to connect side frames facing each other, among the plurality of side frames, and
wherein the venting path is formed inside the cross-beam.

7. The battery pack according to claim 5,
wherein the plurality of venting devices are arranged symmetrically with respect to the cross-beam.

8. The battery pack according to claim 3,
wherein at least one inlet configured such that the venting gas flows into the venting path is formed in the pack frame.

9. The battery pack according to claim 8,
wherein a plurality of inlets are provided to be spaced apart from each other along a direction in which the pack frame extends.

10. The battery pack according to claim 8,
wherein the inlet is formed in an oblong shape in a direction in which the pack frame extends.

11. The battery pack according to claim 9,
further comprising a rib provided inside the venting path formed in the pack frame and configured to guide the venting gas toward the venting device.

12. The battery pack according to claim 11,
wherein a plurality of inlets are arranged in a plurality of rows, and
wherein the rib is provided between two adjacent rows.

13. The battery pack according to claim 11,
wherein the rib is configured to extend in a straight line along a direction in which the pack frame extends.

14. The battery pack according to claim 13,
wherein the venting path is divided into a plurality of partitioned spaces by the ribs, and
wherein the venting device is configured to communicate with the plurality of partitioned spaces, respectively.

15. The battery pack according to claim 3,
wherein the pack case comprises a pack lid coupled to a top of the pack frame and configured to be spaced apart from the battery cell, and
wherein the venting gas is configured to flow in a space between the battery cell and the pack lid.

16. The battery pack according to claim 3,
wherein the venting device comprises a fan assembly.

17. The battery pack according to claim 16,
wherein the fan assembly comprises
a coupling portion configured to be coupled to the pack frame, and
a plurality of rotating portions extending outward from the coupling portion and configured to be rotatable.

18. A vehicle comprising a battery pack according to any one of claims 1 to 17.
